# EUROPÄISCHE PATENTSCHRIFT

(11) **EP 1 959 176 B1**
(45) Veröffentlichungstag und Bekanntmachung des Hinweises auf die Patenterteilung: **23.12.2009**
(21) Anmeldenummer: 08002736.0
(22) Anmeldetag: 14.02.2008
(51) Int. Cl.: F16K 31/05

(54) **Antrieb für Kugelhähne**
Drive for ball valves
Engrenage pour robinets à boisseau sphérique

(30) Priorität: 16.02.2007 DE 102007007680
(43) Veröffentlichungstag der Anmeldung: 20.08.2008
(73) Patentinhaber: Nurkraft GmbH, 22459 Hamburg (DE)
(72) Erfinder: Fischer, Dierk, 20251 Hamburg (DE)
(74) Vertreter: Graalfs, Edo

(56) Entgegenhaltungen:
- FR-A- 2 422 085
- FR-A- 2 486 678
- US-A- 3 524 526

## Beschreibung

Die Erfindung bezieht sich auf einen Stellantrieb für Kugelhähne nach dem Patentanspruch 1.

Ein Ventilstellantrieb wurde bereits in Dokument FR 2 422 085 offenbart.

Es ist bekannt, im Zuge einer Gas- oder Flüssigkeitsleitung, z. B. Ölleitung, Kugelventile einzusetzen, um den Fluidfluss zu unterbrechen oder durchzulassen. Es ist auch bekannt, für derartige Kugelhähne Stellantriebe vorzusehen. Die Stellantriebe sind zumeist mit einem Elektromotor versehen, der über ein stark untersetzendes Getriebe mit der Welle des Kugelkükens gekoppelt ist. Der Verstellwinkel zwischen Offen- und Schließstellung beträgt üblicherweise nur 90°.

Elektromotorische Stellantriebe haben den Vorteil, daß sie von einer Zentrale aus betätigt werden können, so daß es nicht erforderlich ist, daß Bedienungspersonen zu entfernt liegenden Stellen gehen, um eine Leitung durchzuschalten oder abzusperren. Gleichwohl ist erforderlich, derartige Kugelhähne manuell betreibbar zu machen, falls die Stromversorgung ausfällt oder der Motor defekt ist.

Die Leistung von Elektromotoren für derartige Stellantriebe ist möglichst klein auszulegen, um den Aufwand klein zu halten. Dementsprechend wird eine hohe Untersetzung im Getriebe vorgesehen, um das erforderliche Drehmoment, insbesondere für das Losbrechen, aufzubringen. Es ist bekannt, hierfür ein Planetengetriebe vorzusehen.

Zumindest bei Anordnung der Kugelhähne im Freien ist erforderlich, den Stellantrieb in einem Gehäuse geschützt unterzubringen. Der Elektromotor erzeugt naturgemäß bei seiner Betätigung Wärme, die bestimmte Werte nicht überschreiten darf, um den Motor nicht zu beschädigen.

Der Erfindung liegt die Aufgabe zugrunde, einen Stellantrieb für einen Kugelhahn zu schaffen, der mit geringem Aufwand auch per Hand betätigt werden kann. Außerdem liegt der Erfindung die Aufgabe zugrunde, den Stellantrieb kompakt zu bauen und gleichwohl zu verhindern, daß eine Überhitzung bei Betätigung des Elektromotors auftritt.

Diese Aufgabe wird durch die Merkmale des Anspruchs 1 gelöst.

Bei dem erfindungemäßen Stellantrieb ist oberhalb des Antriebsmotors auf dessen Welle ein Übersetzungsgetriebe angeordnet, das mit einer Welle über das Gehäuse des Stellantriebs hinaussteht und mit dem Handrad gekoppelt ist.

Bei einem mit einem Elektromotor angetriebenen Stellantrieb liegt die Drehzahl meist bei mehreren tausend Umdrehungen pro Minute. Da der Kugelhahn lediglich eine Viertelumdrehung machen muss, ist daher eine entsprechende Untersetzung erforderlich. Würde über den Handantrieb unmittelbar auf die Motorwelle eingewirkt, müsste eine große Anzahl von Umdrehungen vorgenommen werden, um eine Verstellung des Kugelhahns per Hand zu erzielen. Es ist jedoch auch denkbar, unmittelbar auf das Zahnrad des Stirnradgetriebes einzuwirken. Dies erfordert jedoch eine relativ groß bauende Konstruktion. Außerdem ist unter Umständen das manuell aufzubringende Moment relativ hoch. Die Erfindung sieht stattdessen ein Übersetzungsgetriebe zwischen Handrad und Motorhülle vor. Das Getriebe kann so ausgelegt werden, daß einige Umdrehungen mit dem Handrad erforderlich sind, um die Welle des Kugelhahns um 90° zu drehen. Das hierbei von Hand aufzubringende Moment ist daher relativ gering und reicht in jedem Fall aus, um das mehr oder weniger hohe Losbrechmoment des Kugelhahns zu überwinden.

Nach einer Ausgestaltung der Erfindung ist der Elektroantriebsmotor ein Gleichstrommotor. Das erste und zweite Getriebe kann ein Planetengetriebe sein.

Wie bereits erwähnt, besteht die Gefahr, daß der Elektromotor bei Bettätigung des Kugelhahns überhitzt wird. Um dies zu vermeiden, sieht eine weitere Lösung der Erfindung vor, daß am Motorgehäuse ein Peltier-Element angebracht ist. Der Peltier-Effekt beruht bekanntlich auf dem Phänomen, daß bei Fließen eines Stroms in dem Element auf einer Seite Kälte und auf der anderen Seite Wärme erzeugt wird. Es hat sich herausgestellt, daß bei den relativ kleinen Elektromotoren, wie sie für Kugelhähne mit einem Durchmesser von 200 - 250 mm eingesetzt werden, ein Peltier-Element vollständig ausreicht, um eine Überhitzung des Motors zu verhindern.

Das Peltier-Element kann über einen Schalter an Spannung gelegt werden, der zusammen mit dem Schalter betätigt wird, durch den der Antriebmotor unter Spannung gesetzt wird. Alternativ kann auch vorgesehen sein, daß Peltier-Elemente ständig an Spannung anzuschließen. Der Energieverbrauch eines Peltier-Elements ist so gering, daß eine ständige Verbindung mit der Spannungsquelle gerechtfertigt sein kann.

Ein Ausführungsbeispiel der Erfindung wird nachfolgend anhand von Zeichnungen näher erläutert.
- Figur 1: zeigt äußerst schematisch einen Stellantrieb nach der Erfindung.
- Figur 2: zeigt ein Schaltbild des Stellantriebs nach Figur 1.

In einem Gehäuse 10 sind ein Gleichstrommotor 12, ein Planetengetriebe 14 und ein Stirnradgetriebe 16 angeordnet. Der Gleichstrommotor 12 treibt über das Planetengetriebe 14 und das Stirnradgetriebe 16 eine Welle 18 an, die mit der Welle eines nicht gezeigten Kugelhahns gekoppelt ist. Die Untersetzung des Planetengetriebes 16 ist derart, daß mehrere tausend Umdrehungen des Gleichstromsmotors 14 erforderlich sind, um die Welle 18 um 90° zu verdrehen. Ein derartiger Antriebsmechanismus ist an sich bekannt.

Die Welle des Elektromotors 12 geht auf der dem Getriebe 14 gegenüberliegenden Seite auf ein weiteres Planetengetriebe 20, das als Übersetzungsgetriebe ausgeführt ist. Eine Eingangswelle 22 des Übersetzungsgetriebes 20 ist aus dem Gehäuse 10 herausgeführt und mit einem Handrad 24 gekoppelt. Das Übersetzungsgetriebe 20, das ebenfalls ein Planetengetriebe sein kann, sorgt dafür, daß für die Verdrehung der Welle 18 eine Mehrzahl von Umdrehungen des Handrads 24 erforderlich ist.

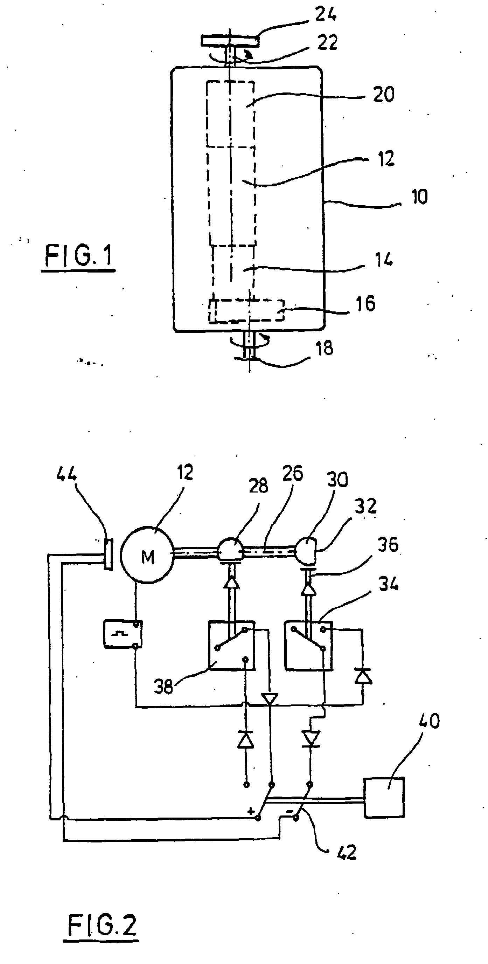

In Figur 2 ist lediglich der Gleichstrommotor 12 dargestellt und eine Welle 26, mit der zwei Nocken 28, 30 gekoppelt sind. Die Nocken 28, 30 weisen Abflachungen 32 auf, welche um 90° zueinander versetzt sind. In Figur 2 wird ein Schalter 34 betätigt, wenn ein Nockenfolger 36 außerhalb der Abflachung 32 am Nocken 30 anliegt. Das gleiche gilt für den Nocken 28 mit der ein Schalter 38 betätigt werden kann. Ein Relais 40 betätigt Schaltkontakte 42. Im gezeigten Fall dreht der Motor 12 in der einen Richtung, bis die Abflachung 32 erreicht ist. In diesem Fall liegt der Nockenfolger des Nockens 28 außerhalb der Abflachung an und schaltet den Motor 12 in die Gegenrichtung. Die Nockenanordnung sorgt dafür, daß eine Verstellung jeweils nur um 90° in einer Richtung stattfindet.

Aus der darstellten Schaltungsanordnung geht ferner hervor, daß nach der Abschaltung des Motors 12 von der Spannungsquelle, die beispielsweise eine Spannung von 24 Volt aufweist, dieser kurzgeschlossen ist. Auf diese Weise wird ein induktives Bremsmoment erzielt. Eine derartige Vorkehrung ist jedoch bereits bekannt geworden.

Ein Peltier-Element 44 ist dem Gleichstrommotor 12 zugeordnet, welches insbesondere am nicht gezeigten Gehäuse des Elektromotors 12 angeordnet ist. Es ist unmittelbar mit der Spannungsquelle verbunden. Das Peltier-Element 44 kühlt permanent den Gleichstrommotor und verhindert somit eine Überhitzung und damit eine Zerstörung der Wicklung während eines Verstellvorgangs. Das Peltier-Element sorgt daher dafür, daß der Elektromotor sehr klein dimensioniert werden kann, ohne dass unzulässig hohe Temperaturen die Motorwicklung beeinträchtigen.

## Patentansprüche

1. Stellantrieb für einen Kugelhahn, mit einem Gehäuse (10), einem elektrischem Antriebsmotor (12), der über ein Untersetzungsgetriebe (14) unterhalb des Antriebsmotors mit einem Stirnradgetriebe gekoppelt ist, das auf eine Antriebswelle des Kugelhahns wirkt, und Mitteln zur manuellen Verstellung des Kugelkükens, **dadurch gekennzeichnet, daß** oberhalb des Antriebsmotors (12) ein Übersetzungsgetriebe (20) angeordnet ist, das mit der Welle des Antriebsmotors gekoppelt ist und eine Eingangswelle (22) des Untersetzungsgetriebes (20) aus dem Gehäuse (10) nach oben heraus geführt und mit einem Handrad (24) gekoppelt ist.

2. Stellantrieb nach Anspruch 1, **dadurch gekennzeichnet, daß** der Antriebsmotor (12) ein Gleichstrommotor ist.

3. Stellantrieb nach Anspruch 1 oder 2, **dadurch gekennzeichnet, daß** erstes und/oder zweites Getriebe (14, 20) ein Planetengetriebe ist.

4. Stellantrieb nach einem der Ansprüche 1 bis 3, **dadurch gekennzeichnet, daß** am Motorgehäuse mindestens ein Peltier-Element (44) angebracht ist.

5. Stellantrieb nach Anspruch 4, **dadurch gekennzeichnet, daß** das Peltier-Element über einen Schalter gleichzeitig mit dem Antriebsmotor an Spannung gelegt ist.

6. Stellantrieb nach einem der Ansprüche 1 bis 5, **dadurch gekennzeichnet, daß** die Motorwelle (26) mit Nocken (28, 30) gekoppelt ist, die einen Schalter (34, 38) betätigen und den Motor nach Beendigung eines Drehwinkels der Motorwelle (26) ausschalten und der Motor (12) danach über seine Klemmen kurzgeschlossen ist, wenn der Motor (12) ausgeschaltet ist.

## Claims

1. A drive for a ball valve, with a housing (10), an electric drive motor (12), which is coupled via a reduction gearing (14) beneath the drive motor to a spur gear that acts on the drive shaft of the ball valve, and means for manual adjustment of the valve plug, **characterized in that** a step-up gearing (20), which is coupled to the shaft of the drive motor, is disposed above the drive motor (12), and an input shaft (22) of the step-up gearing (20) leads upwards out of the housing (10), and is coupled to a handwheel.

2. The drive according to Claim 1, **characterized in that** the drive motor (12) is a direct current motor.

3. The drive according to Claim 1 or 2, **characterized in** the first and/or second gearing (14, 20) is a planetary gearing.

4. The drive according to one of the Claims 1 to 3, **characterized in that** at least one Peltier element (44) is attached to the motor housing.

5. The drive according to Claim 4, **characterized in that**, using a switch, the Peltier element is connected to power simultaneously with the drive motor.

6. The drive according to one of the Claims 1 to 5, **characterized in that** the motor shaft (26) is coupled to cams (28, 30) that actuate a switch (34, 38) and switch the motor off after completion of an angle of rotation of the motor shaft (26), and the motor (12) is subsequently short circuited using a clamp, when the motor (12) is switched off.

## Revendications

1. Engrenage pour un robinet à boisseau sphérique, avec un carter (10), un moteur de commande électrique (12) qui est couplé par le biais d'un engrenage démultiplicateur (14) sous le moteur de commande à un engrenage cylindrique qui agit sur un arbre d'entraînement du robinet à boisseau sphérique, et des moyens pour régler manuellement le boisseau sphérique, **caractérisé en ce qu'**au-dessus du moteur de commande (12) est disposé un engrenage multiplicateur (20), qui est couplé à l'arbre du moteur de commande, et un arbre d'entrée (22) de l'engrenage multiplicateur (20) est guidé vers le haut hors du carter (10) et couplé à un volant de manoeuvre (24).

2. Engrenage selon la revendication 1, **caractérisé en ce que** le moteur de commande (12) est un moteur à courant continu.

3. Engrenage selon la revendication 1 ou 2, **caractérisé en ce que** le premier et/ou second engrenage (14, 20) est un engrenage planétaire.

4. Engrenage selon l'une des revendications 1 à 3, **caractérisé en ce qu'**au moins un élément Peltier (44) est appliqué sur le carter de moteur.

5. Engrenage selon la revendication 4, **caractérisé en ce que** l'élément Peltier est mis sous tension en même temps que le moteur de commande par le biais d'un commutateur.

6. Engrenage selon l'une des revendications 1 à 5, **caractérisé en ce que** l'arbre du moteur (26) est couplé à des cames (28, 30) qui actionnent un commutateur (34, 38) et mettent hors circuit le moteur après l'achèvement d'un angle de rotation de l'arbre du moteur (26) et le moteur (12) est ensuite court-circuité par le biais de ses bornes lorsque le moteur (12) est mis hors circuit.
